Europäisches Patentamt

European Patent Office

Office européen des brevets

(11) Publication number: **0 402 866 B1**

(12) **EUROPEAN PATENT SPECIFICATION**

(45) Date of publication of patent specification: **30.03.94** (51) Int. Cl.⁵: **C08L 1/02**, C08J 3/05, B01D 39/16

(21) Application number: **90111109.6**

(22) Date of filing: **12.06.90**

(54) Organic microfibrilated material for filter.

(30) Priority: **14.06.89 JP 150027/89**

(43) Date of publication of application:
**19.12.90 Bulletin 90/51**

(45) Publication of the grant of the patent:
**30.03.94 Bulletin 94/13**

(84) Designated Contracting States:
**AT BE CH DE DK ES FR GB GR IT LI LU NL SE**

(56) References cited:
DE-A- 2 801 685
GB-A- 1 567 714

**PATENT ABSTRACTS OF JAPAN, vol. 7, no. 122 (C-168)[1267], 26th May 1983; & JP-A-58 040 145**

**PATENT ABSTRACTS OF JAPAN, vol. 13, no. 29 (C-562)[3377], 23rd January 1989; & JP-A-63 232 814**

**PATENT ABSTRACTS OF JAPAN, vol. 5, no. 89 (C-058), 10th June 1981; & JP-A-56 033 018**

(73) Proprietor: **DAICEL CHEMICAL INDUSTRIES, LTD.**
**No. 1-Banchi, Teppo-cho**
**Sakai-shi Osaka-fu 590(JP)**

(72) Inventor: **Hayashi, Yoshitaka**
**Evergreen Yodogawa 2-425, 1-5**
**Higashiawajicho**
**Higashiyodogawa-ku Osaka-shi Osaka(JP)**
Inventor: **Miyagawa, Akira**
**497-48, Kariya,**
**Mitsucho**
**Ibo-gun, Hyogo(JP)**
Inventor: **Fujikawa, Akira**
**1082-5n Kakanocho,**
**Sakae-ku**
**Yokohama-shi, Kanagawa(JP)**
Inventor: **Hiramoto, Takashi**
**1542-6, Katsuse**
**Fujimi-shi, Saitama(JP)**

(74) Representative: **Patentanwälte Grünecker, Kinkeldey, Stockmair & Partner**
**Maximilianstrasse 58**
**D-80538 München (DE)**

CENTRAL PATENT INDEX, section A: PLAS-DOC, week 8509, 24th April 1985, accession no. 85-054264/09, Derwent Publications Ltd, London, GB;

CHEMICAL ABSTRACTS, vol. 93, no. 4, 28th July 1980, page 87, abstract no. 28023d, Columbus, Ohio, US; V.V. MITKOVA et al.: "Improved procedure for preparing paper stock for the production of capacitor paper with high electrically insulating properties"

**Description**

[Industrial Field of Utilization]

The present invention relates to an organic microfibrous material capable of forming an interlaced sheet layer. Such a microfibrous material is useful, for example, when a liquid containing extremely minute impurities is filtered.

[Prior art]

Some fibrous materials are employed in the form of interlaced sheet layers. One of the representatives of such fibrous materials is paper. Papers having various properties are manufactured according to the purposes for which they are used. An example of porous paper is filter paper. Further, a certain fibrous material is employed after being dispersed into water and forming an interlaced sheet layer on a base material immediately before the employment. Filter aid is an example of such a fibrous material.

In the above-described uses, the interlaced sheet layer composed of fibrous material is required to have both of a blocking function according to the diameter of particles to be separated out and a medium permeating function. Generally speaking, it is difficult to reconcile pores of such sizes that can perfectly block minute particles, for example, bacteria, and such a liquid permeating function that can maintain a filtration rate in a practically satisfactory range. As a substance which can satisfy the above-described requirement considerably, there has been hitherto known asbestos, which has been also used as a filter aid. In recent years, however, asbestos has been recognized to be harmful to the human body, and attempts have been made to replace the asbestos with an organic fibrous material. In general, however, the organic fibrous material does not possess fineness and nerve equivalent to those of asbestos. There has been hitherto found no material which satisfies both of the function to block especially minute particles and the liquid permeating function.

For example, when crushed cellulose which has been hitherto commercially available as a filter aid is used in combination with diatomaceous earth, the liquid permeating function is satisfactory, but minute particles such as bacteria can not be blocked perfectly. The filter aid obtained by wet beating of linter (Published Examined Japanese Patent Application No. 59003/85) being superior to crushed cellulose in the function to block minute particles, it is not well satisfied in all cases. Further, the microfiber manufactured by passing wood pulp through a high-pressure homogenizer is disclosed as an organic fibrous material which is thought to have a fine structure, in Published Examined Japanese Patent Application No 44763/88. When it is tried to form a single interlaced sheet layer using the material, however, a small amount of fiber forms an elaborate layer at first, but then a liquid comes not to pass well, whereby a thick filter layer can not be formed. The material merely improves a filtering function by the combined use with other filter aids (Published Unexamined Japanese Patent Application No. 42711/88).

Diatomaceous earth is now being widely used as a filter aid. However, a large precoat amount of, for example, 700 to 1000 $g/m^2$ is required to raise a blocking rate, whereby waste treatment costs a great deal. Besides, the diatomaceous earth has a problem of environmental pollution caused by dust.

GB 2 066 145 corresponding to JP-A 56-100801 discloses a process for microfibrilating cellulose fibers. U.S. patent 4 481 076 corresponding to JP-A 59-189141 discloses re-dispersible, microfibrilated cellulose. U.S. patents 4 452 721, 4 378 381, 4 464 287, 4 452 722, 4 487 634 and 4 500 546, all corresponding to JP-A 57-107234, disclose a dispersion of microfibrilated fibers of cellulose.

[ Summary of the Invention ]

It is therefore an object of the invention to provide an organic microfibrous material which forms a skeleton configuration embracing fine spaces due to interlacement of fibers and maintains the configuration against compression. Another object of the invention is to provide a new material having a filtering function and ease of handling, which can take the place of substances, such as diatomaceous earth and asbestos, which have a problem of environmental safety in time of waste treatment and handling.

Such a material, if realized, is expected to have both of the function to block extremely minute particles and the liquid permeating function which is practically satisfactory. However, there has been hitherto found no satisfactory material having the above-described functions.

The invention provides an organic microfibrilated material which comprises fibers having a variety of thicknesses, having a Shopper's Rieglar of 40 degree SR or greater, having a T value of 15 or greater when the fibers are formed in a filter sheet.

3

It is preferable that the fibers are tangled with one another and can be formed into a sheet thereof. The fibers may be made of cellulose or a polymer of rigid straight chains.

The invention provides a filter composed of the material as defined above; a filter device comprises a support and a filter layer formed on the support by accumulating the material as defined above; a filter paper comprising the material as defined above and another material for filter, such as paper pulp, cellulose not being microfibrilated, fiber of a rigid straight chain-having polymer not being microfibrilated.

The invention provides a process for preparing an organic microfibrilated material, which comprises fibers having a variety of thicknesses, having a Shopper fileration index of 50 degree SR or greater, having a T value of 15 or greater when the fibers are formed in a filter sheet, which process comprises the steps of fibrilating crude fibers until microfibrilated partly. The microfibrilation may be conducted by the use of a high pressure homogenizer, a refiner, a colloid mill or a beater.

In the invention, the material has a Shopper's Rieglar of 40 degree SR or greater, preferably 50 degree SR or greater. Shopper's Rieglar may be called hereinafter Schopper filtration index or Schopper freeness. The fibers may be interlaced with one another or tangled with one another. The material may be resistant to compression.

The polymer of rigid straight chains includes aromatic polyamides such as poly(p-phenyleneterephthalic amide), being available in the tradename of Kevlar, poly(p-benzamide), poly(p-phenylenebenzbisoxazol), poly(amidehydrazide), being available in the tradename of X-500 from Monsanto, and poly(p-phenyleneterephthalic amide-3,4-diphenylether terephthalic amide, being available in the tradename of HM-50 from Teijin, polyhidrazide, aromatic thiazols, aromatic oxazols, aromatic polyesters and ladder-type polymers.

The objects of the invention can be attained by an organic microfibrous material having the ability to form an interlaced sheet layer which is resistant to compression, the microfibrous material having a Schopper freeness of 50° SR or above and a T-value of 15 or more.

The T-value which characterizes the microfibrous material of the invention can be measured by the following test method.

Namely, as shown in Example 2, using a pressure filter (diameter of filter: 40 mm), a suspension of the organic microfibrous material in water (0.237 g/ℓ) is allowed to flow at a flow rate of 40 mℓ/minute, thereby forming an interlaced sheet layer (188 g/m$^2$). The thickness of the sheet layer is measured using a peep glass, and the T-value is calculated according to the equation

$$T = t \times d \times 10^3 / 188$$

t: apparent thickness (mm)
d: true specific gravity (g/cc)

It can be understood that the T-value is an indication of the ability to form an interlaced sheet layer which is resistant to compression, and the T-value is a magnification of the thickness of the sheet layer to a theoretical which can be calculated from the true specific gravity of a substance constituting the fiber.

Further, the Schopper freeness which characterizes the microfibrous material of the invention together with the T-value can be measured by the Schopper measuring method described in JIS 8121-1976 "Method of Test for Freeness of Pulp".

In the present invention, since fibers are interlaced to form the skeleton configuration embracing fine porous spaces, the fineness of the fibers is required to be enhanced to a Schopper freeness of 50° SR or above, preferably 70° SR or above and more preferably 80° SR or above.

The Schopper freeness measured with a Schopper tester is an indication of the water filtering capability of pulp. Generally speaking, materials having high Schopper freeness, namely, materials poor in water filtering capability are not thought to be favorable as filter materials. Further, since the materials having high Schopper freeness are considered to have enhanced beating degree, fine interlaced structures are expected to be formed. Under conditions where compressive force is applied as in the case of filtration, however, skeletal structures of fine fibers are bent, and skeleton configurations holding sufficient spaces can not be formed, whereby media come to be unable to permeate. Accordingly, there has been known no material having enhanced beating degree, which is capable of forming a filter layer suited for pressure filtration.

In disregard of the above-described commonsense prediction, the inventor has made various studies. As a result, he has found that there exists really a microfibrous material capable of forming a porous interlaced sheet layer which is resistant to compression, even with an enhanced Schopper freeness, and such a new fibrous material is capable of forming a filter layer having a satisfactory permeability under practical filtration conditions though the material is fine in texture, and completed the present invention.

4

Examples of the microfibrous material according to the invention include a cellulosic microfibrous material obtained by the treatment of linter as a starting material using a high-pressure homogenizer, and a synthetic high polymer microfibrous material obtained by the treatment of Kebler (brand name) pulp as a starting material using a high-pressure homogenizer.

High polymer material having a high crystallinity is generally preferable as the microfibrous material of the invention. For example, the material obtained using linter as a starting material is preferable to the material from wood pulp, as the cellulosic microfibrous material. However, proper material may be obtained by pretreatment, etc. of the material derived from wood pulp and employed.

Natural high polymer materials and synthetic high polymer materials other than cellulose may be used. Proper material can be selected on the basis of, for example, the crystallinity, Young's modulus, flexural rigidity, etc. of the high polymer material itself. Examples of the proper material include aromatic polyamides, aromatic polyesters, etc.

The fibrous material is usually fined in the state of dispersion in water. The fining method may be selected among fibrous material fining techniques available at the time of practice, including a high-pressure homogenizer, disc refiner, jordan and beater, judging that the material having the desired beating degree can be obtained. The high-pressure homogenizer is an especially effective means.

The high-pressure homogenizer available in the invention is on the market, for example, as a Manton-Gaulin (brand name) homogenizer. This homogenizer is ordinarily an apparatus used for the production of homogeneous liquid emulsions, which comprising a high pressure pump; valve means discharging a solution to be treated, from the high pressure pump at high speed; valve seat means with which the discharged solution collides; and a passage circulating the treated solution to the inlet side of the high pressure pump. This kind of apparatus and the operation thereof are described in publicly known literatures (e.g., Chemical Engineering, May 13, 1974, p. 86-92).

The treatment with the high-pressure homogenizer is essentially continuous. However, the treatment may be performed with batch type charging of the solution to be treated, namely by a semi-continuous operation. The number of treatments can be obtained by means of calculation according to the ratio of the discharge to charge of the solution. Treatment pressure, and the number of treatments can be easily determined by comparison of the properties of the treated solution obtained with the desired properties. The higher the treatment pressure, the more is expected the same level of fining effect, even with a small number of treatments.

In the treatment with the high-pressure homogenizer, it is effective to perform an appropriate pretreatment so as to accommodate the apparatus, according to the properties of the material. In the production conditions described in publicly known literatures (e.g., Published Examined Japanese Patent Application No. 19921/85, Published Examined Japanese Patent Application No. 44763/88, and Published Unexamined Japanese Patent Application No. 196790/88) with a view to suspensions having high water retentivity and dispersion stability, the degree of beating is thought to be generally excessive. The excessive treatment with the high-pressure homogenizer lowers the permeability of liquids, which eventually makes the measurement of the T-value impossible, whereby the material of the invention can not be obtained. The number of treatments and treatment conditions should be within appropriate regions in view of the properties of raw materials and products.

Hitherto, wood-pulp paper, linter paper, crushed wood pulp, wet beaten linter, etc. have been employed in the industries connected with filtration. These materials have Schopper freeness of, for example, 30° SR or below, the beating degree of which being not so enhanced as that of the material according to the invention. Further, the materials can not block extremely minute particles though they are capable of forming porous interlaced sheets excellent in the permeability of liquids.

It has been known that cellulosic microfibrous material excellent in water retentivity and dispersion stability can be obtained by the treatment of wood pulp using she high-pressure homogenizer. Although the material has Schopper freeness of 90° SR, which being the same level as that of the material according to the invention, it can not form a porous interlaced sheet excellent in the permeability of liquids, and the T-value can not be measured. Besides, there have been known synthetic high polymer microfibrous materials. However, there has not been really known the material having both of the T-value and Schopper freeness characterizing the invention.

When the microfibrous material of the invention is supplied onto a base material, in the form of a dispersion liquid, it forms a sheet layer having a skeleton configuration due to interlacement of fibers. Although media can pass through spaces in the skeleton, particles are captured by the fine skeleton configuration. The material of the invention, which forming the configuration, has sufficient fineness to block minute particles effectively, and resistivity to compression, and ensures excellent permeability of media at the time of pressure filtration.

The material of the invention can be used for precoat and body feed as a filter aid. Since the material of the invention is usually produced in the form of a dispersion in water, it may be used as such after the adjustment concentration, or the material after going through a step of concentration or drying for convenience for storage and distribution may be adjusted to the prescribed concentration and used. However, the dried material may sometimes pose a problem in redissociability. Accordingly, the material is advantageously handled as a composition containing more than 50 % of a sterilized aqueous medium, or a composition containing an auxiliary for promoting the redissociability, for example, a surface active agent. Further, the material of the invention can be used in a state where an interlaced sheet is formed in advance, as is the case of filter paper.

( Description of Drawings )

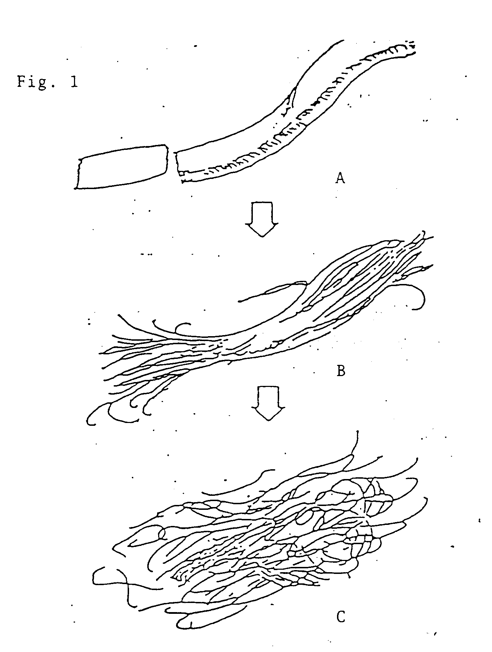

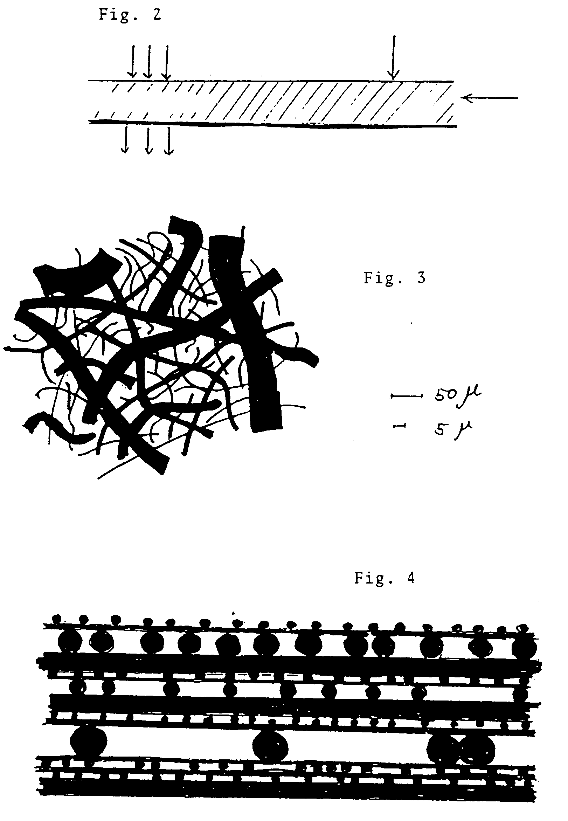

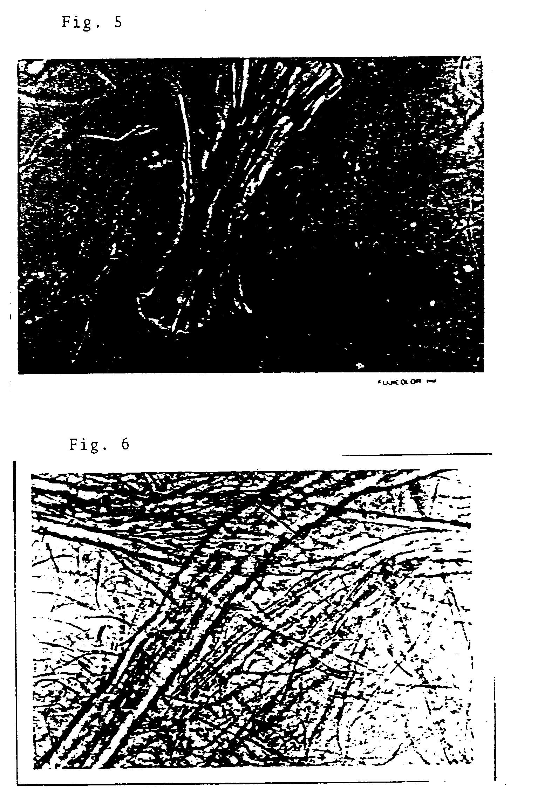

Fig. 1 shows cellulose fiber which is processed by the invention. A is a view of the starting cellulose fiber. B is a view of the fiber in which microfibrilation starts. C is a view of the completely microfibrilated fiber. Fig. 2 shows a crosssectional view of the filter of the invention. Fig. 3 is a microscopically enlarged view of the structure of tangled fibers having different thicknesses in the filter of the invention. Fig. 4 is a microscopically enlarged view of the structure of accumulated fibers to form a filter of the invention, fibers having different thicknesses. Fig. 5 is a microscopic picture of an actually microbibrilated fiber according to the invention, standing in the stage shown in Fig. 1B. Fig. 6 is a microscopic picture of an actually microbibrilated fiber according to the invention, standing in the stage shown in Fig. 1C.

Hereinafter, the present invention will be described by way of specific examples.

[Working Examples]

Example 1

Preparation of cellulosic microfibrous material:

Using refined linter (Vackai HVE) as a raw material, a 2 % suspension of cellulose in water is obtained by pretreatment so that it can pass through the nozzle of an apparatus. The suspension is charged into a high-pressure homogenizer (Gaulin 15M-8TA) at ordinary temperature (25 °C), and treated at a pressure of 500 kg/cm$^2$G for four times.

The resultant suspension of microfibrous material is diluted to a concentration of 0.2 %, followed by measurement of the Schopper freeness (° SR). As a result, the Schopper freeness is 92° SR. The outline of the Schopper freeness measuring method is as follows. 1000 mℓ sample is poured into a filter cylinder, and fallen into a measuring funnel through a screen placed at the bottom with a conical valve raised. Although the filtrate is discharged from sm bottom pores, the filtrate exceeding a capacity for discharge from the bottom pores is overflown and discharged from a bypass. The Schopper freeness is a percentage of the amount of the filtrate discharged from the bypass to 1000 mℓ.

Example 2

Formation of interlaced sheet layer:

The microfibrous material suspension obtained in Example 1 is diluted to a concentration of 0.237 g/ℓ, and supplied into a pressure filter with a filtration area of 12.6 cm$^2$ at a rate of 40 ml/minute (flow rate: 1900 ℓ/hr•m$^2$) using a diaphragm pump, to thereby obtain a precoat layer (188 g/m$^2$) formed by the interlacement of fibers. The final pressure is 0.12 kg/cm$^2$G, and the thickness (t) of the sheet layer is 2.62 mm. The T-value obtained using the true specific gravity (d = 1.6 g/cc) of cellulose is 22.3.

When the precoat amount (g/m$^2$) is changed by the change of the concentration of the suspension charged, and the flow rate (ℓ/hr•m$^2$) is changed, the final pressure changes as shown below.

| Precoat amount | 125 | 188 | 250 |
|---|---|---|---|
| Flow rate 1200 | 0 | 0 | 0 |
| Flow rate 1900 | 0 | 0.12 | 0.2 |
| Flow rate 3000 | 0.1 | 0.5 | 1.0 |

6

Example 3

Blocking test for standard particles:

Using 1 ℓ solution in which standard particles (manufactured by Sekisui Kagaku Kogyo, latex, particle diameter: 0.78 μm) are adjusted to a concentration of 10 ppm, pressure filtration is performed through the precoat layer (188 g/m$^2$) obtained in Example 2, at the same flow rate as in the precoating. The final pressure is 1.5 kg/cm$^2$G, the concentration of particles in the filtrate is 0.5 ppm, and the blocking rate is 95 %.

When the precoat amount and flow rate are changed, the final pressure changes as shown below.

| Precoat amount | 125 | 188 | 250 |
|---|---|---|---|
| Flow rate 1200 | 0.2 | 0.5 | 0.8 |
| Flow rate 1900 | 0.4 | 1.5 | 3.1 |
| Flow rate 3000 | 1.8 | 4.0 | 5 or more |

When the precoat amount and flow rate are changed, the concentration of particles changes as shown below.

| Precoat amount | 125 | 188 | 250 |
|---|---|---|---|
| Flow rate 1200 | 0.2 | 0.3 | 0.2 |
| Flow rate 1900 | 0.8 | 0.5 | 0.4 |
| Flow rate 3000 | 0.7 | 0.3 | Unfiltrable |

Example 4

Active carbon leakage test:

Using 1 ℓ dispersion solution of 0.1 % active carbon (manufactured by Futamura Kagaku, grade for food additive liquor), pressure filtration is performed through the precoat layer (188 g/m$^2$) obtained in Example 2, at the same flow rate as in the precoating. The final pressure is 0.5 kg/cm$^2$G. Visual observation of the filtrate and the back side of the precoat layer reveals that there is no carbon leakage.

When the precoat amount and flow rate are changed, the final pressure changes as shown below.

| Precoat amount | 125 | 188 | 250 |
|---|---|---|---|
| Flow rate 1200 | 0 | 0.1 | 0.2 |
| Flow rate 1900 | 0 | 0.5 | 0.8 |
| Flow rate 3000 | 0.4 | 1.1 | 1.5 |

In all cases, no carbon leakage is observed.

Example 5

Comparative example:

Using the commercially available cellulosic filter aid Rocagent (brand name, Schopper freeness: 30° SR) obtained by wet beating of linter, a precoat layer is formed in a similar manner as in Example 2. 1 ℓ solution of 10 ppm standard particles is pressure-filtered through the precoat layer at the same flow rate as in the precoating. Although the pressure loss is very small (less than 150 mm of water column), the particle blocking rate is low.

When the precoat amount and flow rate are changed the concentration of particles changes as shown below.

| Precoat amount | 125 | 188 | 250 |
|---|---|---|---|
| Flow rate 1200 | 5.2 | 4.8 | 5.2 |
| Flow rate 1900 | 6.6 | 6.3 | 5.8 |
| Flow rate 3000 | 7.0 | 6.0 | 7.4 |

Example 6

Comparative example:

Using the commercially available crushed cellulosic filter aid kC Floc W-100 (brand name, Schopper freeness: 15° SR), a precoat layer (188 g/m$^2$) is formed in a similar manner as in Example 2. The thickness (t) of the sheet layer is 1.33 mm. The T-value obtained using the true specific gravity (d = 1.6 g/cc) of cellulose is 11.3.

1 ℓ solution of 10 ppm standard particles is pressure-filtered through the precoat layer at the same flow rate as in the precoating. Although the pressure loss is negligibly small, the concentration of particles in the filtrate is 8.0 ppm and the blocking rate is only 20 %.

Example 7

Preparation of synthetic fiber microfibrous material:

Using Kebler (brand name) pulp as a raw material, a 2 % suspension of aromatic polyamide fiber in water is obtained by pretreatment so that it can pass through the nozzle of an apparatus. The suspension is treated with a high-pressure homogenizer for 10 times.

The resultant suspension of microfibrous material is diluted to a concentration of 0.2 %, followed by measurement of the Schopper freeness. As a result, the Schopper freeness is 92° SR.

Example 8

Formation of interlaced sheet layer:

The microfibrous material suspension obtained in Example 7 is supplied into a pressure filter under the same conditions as in Example 2, to thereby obtain a precoat layer (188 g/m$^2$) formed by the interlacement of fibers. The filtration is finished without a pressure loss so that the pressure of 5 kg/cm$^2$G can be read by a Bourdon type pressure gage. The thickness (t) of the sheet layer is 4.90 mm. The T-value obtained using the true specific gravity (d = 1.44 g/cc) of the fiber is 37.5.

When the precoat amount (g/m$^2$) and flow rate (ℓ/hr•m$^2$) are changed, the final pressure changes as shown below.

| Precoat amount | 125 | 188 | 250 |
|---|---|---|---|
| Flow rate 1200 | 0 | 0 | 0 |
| Flow rate 1900 | 0 | 0 | 0.1 |
| Flow rate 3000 | 0 | 0 | 0.2 |

Example 9

Blocking test for standard particles:

Using the same procedure as in Example 3, pressure filtration is performed through the precoat layer (188 g/m$^2$) of synthetic fiber microfibrous material obtained in Example 8, at the same flow rate as in the precoating. The final pressure is 0.3 kg/cm$^2$G, the concentration of particles in the filtrate is 0.6 ppm, and the blocking rate is 94 %.

When the precoat amount and flow rate are changed, the final pressure changes as shown below.

| Precoat amount | 125 | 188 | 250 |
|---|---|---|---|
| Flow rate 1200 | 0.1 | 0.1 | 0.1 |
| Flow rate 1900 | 0.1 | 0.3 | 0.4 |
| Flow rate 3000 | 0.2 | 0.3 | 0.6 |

When the precoat amount and flow rate are changed, the concentration of particles changes as shown below.

| Precoat amount | 125 | 188 | 250 |
|---|---|---|---|
| Flow rate 1200 | 0 | 0.1 | 0.3 |
| Flow rate 1900 | 0.4 | 0.6 | 0.6 |
| Flow rate 3000 | 0 | 0.5 | 0.4 |

Example 10

Active carbon leakage test:

Using the same procedure as in Example 4, a dispersion solution of active carbon is pressure-filtered through the synthetic fiber microfibrous material obtained in Example 8, at the same flow rate as in the precoating. The final pressure is 0 to 0.3 kg/cm$^2$G when the precoat amount and flow rate are changed in the same ranges as in Example 4. As a result of visual observation of the filtrate and the back side of the precoat layer, no carbon leakage is observed in all cases.

Example 11

Comparative example:

Using wood pulp (Leonia) as a raw material, a 4 % suspension of cellulose in water is obtained by pretreatment so that it can pass through the nozzle of an apparatus. The suspension is charged into a high-pressure homogenizer, and treated at a pressure of 500 kg/cm$^2$G for 10 times. The resultant suspension of microfibrous material (Schopper freeness: 90° SR) is adjusted to the prescribed concentration, and supplied into a pressure filter in a similar manner as in Example 2. As a result, the pressure becomes more than 5 kg/cm$^2$G instantly, and the desired precoat layer can not be formed.

Example 12

Sheet layer formed by filtration under reduced pressure:

Dispersion solution of filter layer forming material (1.9 g/1 ℓ water) is filled into a Buchner funnel (diameter: 11 cm, depth: 4 cm) with filter cloth placed in the bottom, the funnel being sucked by an aspirator, thereby forming a filter layer (200 g/cm$^2$). After the conclusion of the sucking, the filter layer is separated from the filter cloth, followed by measurement of the thickness $t_B$ (mm) with calipers. $T_B$-value is calculated according to the equation

$$T_B = t_B \times d \times 5 \text{ (d: true specific gravity g/cc)}$$

The material of the invention has a relatively high $T_B$-value like the T-value in the case of pressure filtration.

| | Thickness | d | $T_B$-value |
|---|---|---|---|
| Material of Example 1 | 1.298 | 1.6 | 10.4 |
| Material of Example 7 | 1.797 | 1.44 | 10.8 |
| Comparative material of Example 6 | 1.094 | 1.6 | 8.7 |
| Comparative material of Example 11 | 1.057 | 1.6 | 8.5 |
| Asbestos | 0.686 | 2-3 | 6.9-10.3 |
| Diatomaceous earth | 0.583 | 2 | 5.8 |

## Claims

1. An organic microfibrilated material, which comprises fibers having a variety of thicknesses, having a Shopper's Rieglar value of 80° SR or above, having a T-value of 15 or above when the fibers are formed in a filter sheet, the T-value being calculated according to the equation $T = t \times d \times 10^3/188$ wherein t is the apparent thickness (mm) and d is the true specific gravity of an inter-laced sheet layer (188 g/m$^2$) measured using a peep glass, the interlaced sheet layer having being formed by allowing a suspension of the organic microfibrilated material in water (0.237 g/l) to flow at a flow rate of 40 ml/min using a pressure filter (diameter of filter: 40 mm).

2. The material as claimed in Claim 1, in which the fibers are tangled with one another and can be formed into a sheet thereof.

3. The material as claimed in Claim 1, in which the fibers are made of cellulose or a polymer of rigid straight chains.

4. A filter composed of the material as defined in Claim 1.

5. A filter device comprising a support and a filter layer formed on the support by accumulating the material as defined in Claim 1.

6. A filter paper comprising the material as defined in Claim 1 and another material for filter.

7. The filter paper as claimed in Claim 6, in which another material is selected from the group consisting of paper pulp, cellulose not being microfilbrilated, fiber of a rigid straight chain-having polymer not being microfibrilated.

8. A process for preparing an organic microfibrilated material according to Claim 1 which comprises the step of fibrilating crude fibers until partly microfibrilated.

9. The process as claimed in Claim 8, in which the microfibrilation is conducted by the use of a high pressure homogenizer, a refiner, a colloid mill or a beater.

10. The process as claimed in Claim 8, in which the fibres are made of cellulose or a polymer of rigid straight chains.

## Patentansprüche

1. Organisches, mikrofibrilliertes Material, welches Fasern umfaßt, die eine Vielzahl von Dicken haben, einen Shopper's Rieglar-Wert von 80° SR oder mehr haben, einen T-Wert von 15 oder mehr haben, wenn die Fasern in einem Filterblatt geformt sind, wobei der T-Wert gemäß der Gleichung $T = t \times d \times 10^3/188$ berechnet wird, worin t die scheinbare Dicke (mm) ist und d die tatsächliche relative Dichte einer vernetzten Folienschicht ist (188 g/m$^2$), gemessen mittels eines Lochglases, wobei die vernetzte Folienschicht durch Fließenlassen einer Suspension des organischen mikrofibrillierten Materials in Wasser (0,237 g/l) mit einer Fließgeschwindigkeit von 40 ml/min unter Verwendung eines Druckfilters (Durchmesser des Filters: 40 mm).

2. Material nach Anspruch 1, in dem die Fasern miteinander verwirkt sind und zu einer Folie daraus geformt werden können.

3. Material nach Anspruch 1, in dem die Fasern aus Zellulose oder einem Polymer aus festen geraden Ketten gebildet sind.

4. Filter, zusammengesetzt aus dem wie in Anspruch 1 definierten Material.

5. Filtervorrichtung, umfassend einen Träger und eine durch Anhäufen des wie in Anspruch 1 definierten Materials auf dem Träger gebildete Filterschicht.

6. Filterpapier, umfassend das wie in Anspruch 1 definierte Material und ein anderes Material für Filter.

7. Filterpapier nach Anspruch 6, in dem das andere Material aus der Gruppe, bestehend aus Papierpulpe, nicht-mikrofibrillierter Zellulose, Faser eines nicht-mikrofibrillierten Polymers mit fester, gerader Kette, ausgewählt wird.

8. Verfahren zum Herstellen eines organischen mikrofibrillierten Materials nach Anspruch 1, das die Stufe des Fibrillierens roher Fasern umfaßt, bis sie teilweise mikrofibrilliert sind.

9. Verfahren nach Anspruch 8, in dem die Mikrofibrillation durch die Verwendung eines Hochdruck-Homogenisators, eines Refiners, einer Kolloidalmühle oder einer Mahlmaschine durchgeführt wird.

10. Verfahren nach Anspruch 8, in dem die Fasern aus Zellulose oder einem Polymer aus festen, geraden Ketten hergestellt sind.

**Revendications**

1. Matériau organique microfibrillé, comprenant des fibres ayant diverses épaisseurs, un indice Rieglar de Schopper de 80° SR ou plus, et une valeur T de 15 ou plus, les fibres étant mises sous la forme d'une feuille de filtration, la valeur T étant calculée d'après l'équation $T = t \times d \times 10^3/188$, dans laquelle t représente l'épaisseur apparente (mm) et d représente la masse volumique vraie d'une couche de feuilles entrelacées (188 g/m$^2$) mesurée en employant un verre d'observation, la couche de feuilles entrelacées étant formée en laissant une suspension du matériau organique microfibrillé dans de l'eau (0,237 g/l) s'écouler selon un débit de 40 ml/mn en employant un filtre à pression (diamètre de filtre : 40 mm).

2. Matériau selon la revendication 1, dans lequel les fibres sont enchevêtrées entre elles, et peuvent être façonnées sous la forme d'une feuille.

3. Matériau selon la revendication 1, dans lequel les fibres sont constituées de cellulose ou d'un polymère à chaînes linéaires rigides.

4. Filtre composé du matériau selon la revendication 1.

5. Dispositif de filtration comprenant un support et une couche de filtration formée sur le support par accumulation du matériau selon la revendication 1.

6. Papier-filtre comprenant le matériau selon la revendication 1 et un autre matériau de filtration.

7. Papier-filtre selon la revendication 6, dans lequel l'autre matériau est choisi parmi une pâte à papier, la cellulose non microfibrillée, des fibres d'un polymère à chaîne linéaire rigide non microfibrillé.

8. Procédé de préparation d'un matériau organique microfibrillé selon la revendication 1, comprenant l'opération de fibrillation de fibres brutes jusqu'à ce qu'elles soient partiellement microfibrillées.

9. Procédé selon la revendication 8, dans lequel la microfibrillation est effectuée en employant un homogénéiseur à haute pression, un raffineur, un moulin à colloïde ou une pile raffineuse.

**10.** Procédé selon la revendication 8, dans lequel les fibres sont constituées de cellulose ou d'un polymère à chaîne linéaire rigides.

Fig. 1

A

B

C

Fig. 2

Fig. 3

⊢— 50 μ
⊢ 5 μ

Fig. 4

Fig. 5

Fig. 6